# FASCICULE DE BREVET EUROPEEN

(11) **EP 2 780 178 B1**
(45) Date de publication et mention de la délivrance du brevet: **10.06.2015**
(21) Numéro de dépôt: 12779042.6
(22) Date de dépôt: 25.10.2012
(51) Int. Cl.: B60C 11/04, B60C 11/03

(54) **DISPOSITIF ANTI BRUIT DE RÉSONANCE POUR PNEU**
VORRICHTUNG ZUR RESONANZRAUSCHUNTERDRÜCKUNG FÜR REIFEN
RESONANT-NOISE SUPPRESSOR DEVICE FOR TYRE

(30) Priorité: 18.11.2011 FR 1160555
(43) Date de publication de la demande: 24.09.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: Roty, Gael, Gunma 373-8668 (JP)
(74) Mandataire: Diernaz, Christian
(86) Numéro de dépôt international: PCT/EP2012/071118
(87) Numéro de publication internationale: WO 2013/072169

(56) Documents cités:
- FR-A1- 2 715 891

## Description

### DOMAINE DE L'INVENTION

La présente invention concerne les bandes de roulement de pneu et plus particulièrement les bandes de roulement comprenant des rainures comportant des dispositifs flexibles pour réduire le bruit généré par la mise en résonance de l'air dans ces rainures lors du roulage.

### ÉTAT DE LA TECHNIQUE

Il est connu que le passage dans le contact d'un pneu en roulage sur une chaussée génère une circulation d'air dans un tuyau formé par une rainure notamment une rainure d'orientation générale circonférentielle et la chaussée elle-même, ce tuyau étant ouvert à ses deux extrémités.

L'air dans ce tuyau forme une colonne d'air en vibration dont la fréquence de résonance dépend de la longueur entre les deux extrémités du tuyau et en conséquence de la longueur de rainure dans le contact avec la chaussée.

Cette résonance de l'air dans les rainures a comme conséquence de générer, dans un véhicule pourvu avec ces pneus, un bruit à l'intérieur du véhicule et un bruit à l'extérieur du véhicule.

Ces bruits intérieur et extérieur correspondent le plus souvent à une fréquence voisine de ou égale à 1 kHz correspondant à une fréquence particulièrement sensible à l'oreille humaine. Afin de réduire un tel bruit de résonance, il est connu de disposer, dans chaque rainure d'orientation circonférentielle ou globalement circonférentielle, une pluralité de membranes ou lames de fermeture relativement peu épaisses en matériau caoutchoutique, chaque membrane ou lame de fermeture occupant toute la section de la rainure ou à tout le moins une grande partie de cette section. Chaque membrane de fermeture peut s'étendre à partir du fond de la rainure ou être fixée à l'une au moins des parois délimitant ladite rainure. Par relativement peu épaisse, on entend que chaque membrane de fermeture est apte à fléchir pour ouvrir la section de la rainure sous un flux de liquide notamment lors d'un roulage par temps de pluie.

Grâce à ces membranes de fermeture, la longueur de la colonne d'air dans chaque rainure circonférentielle est réduite par rapport à la longueur totale de la rainure dans le contact, ce qui conduit à un changement de la fréquence de résonance. Le déplacement de fréquence se fait vers des valeurs de fréquences de résonance moins sensibles à l'oreille humaine.

Bien entendu, pour conserver la fonction de drainage de l'eau, en cas de roulage sur chaussée revêtue d'eau, il est nécessaire que cette membrane puisse fléchir d'une façon appropriée sous l'action de la pression de l'eau et ainsi ouvrir la section de la rainure. Il a été proposé plusieurs solutions de ce type pour réduire la résonance de la colonne d'air en vibration dans les rainures.

Une telle façon de faire est par exemple décrite dans les documents de brevet FR2715891, JP3-276802, JP08-150812, JP4-221807.

Un des problèmes rencontrés avec ce type de lames fixées sur les parois de la rainure est la difficulté à obtenir une fermeture de la section de la rainure la plus complète afin de réduire voire éliminer les résonances de l'air dans la rainure tout en obtenant un moulage et un démoulage aisé de ces lames.

### Définitions :

La surface de roulement d'une bande de roulement correspond à la surface de la bande venant en contact avec un sol lors du roulage d'un pneu pourvu d'une telle bande.

Une rainure correspond à un espace formé dans une bande de roulement, cet espace étant délimité par des parois de matière, ces parois étant réunies par un fond de rainure distant de la surface de roulement de la bande d'une distance égale à la profondeur de la rainure. Le fond de rainure correspond à la partie de la rainure qui est située radialement au-dessous de l'indicateur d'usure limite à partir duquel la bande de roulement ne satisfait plus aux exigences légales d'utilisation.

Un bloc est un élément en relief formé sur une bande de roulement, cet élément étant délimité par des creux ou rainures et comprenant des parois latérales et une face de contact, cette dernière - destinée à venir en contact avec la chaussée pendant le roulage, faisant partie de la surface de roulement de la bande.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

### BREF EXPOSÉ DE L'INVENTION

La présente invention vise à obtenir un dispositif de fermeture de rainure dont le moulage et le démoulage sont rendus plus aisés comparativement aux dispositifs connus formés de lames solidaires de l'une des parois délimitant une rainure. La mise en oeuvre de ce dispositif peut intéresser tout type de rainure, que cette rainure soit d'orientation circonférentielle, transversale ou oblique.

A cet effet, l'invention a pour objet une bande de roulement pour pneu, cette bande de roulement ayant une surface de roulement destinée à venir en contact avec une chaussée et comprenant au moins une rainure de largeur W et de profondeur D délimitée par deux parois se faisant face, ces parois étant reliées entre elles par un fond de rainure,

au moins une rainure comportant au moins un dispositif flexible pour fermer au moins partiellement cette rainure lors de son passage dans le contact avec une chaussée, chaque dispositif flexible comprenant au moins une lame d'épaisseur appropriée pour permettre sa flexion sous l'effet d'une circulation de liquide, cette au moins une lame étant portée par une paroi délimitant la rainure,

chaque lame d'épaisseur E étant limitée par une paroi de fond faisant face au fond de la rainure, une paroi d'extrémité faisant face à l'autre paroi de la rainure et une paroi de contact destinée à venir en contact avec la chaussée et des parois latérales espacées l'une de l'autre d'une distance égale à l'épaisseur E de la lame.

Cette bande de roulement est en outre caractérisée en ce que la paroi de fond de la lame comprend une première partie dite partie de raccordement et une seconde partie prolongeant la première partie jusqu'à la partie d'extrémité de la lame, la partie de raccordement se trouvant décalée vers l'extérieur de la bande (c'est-à-dire vers la surface de roulement) par rapport à la seconde partie de la paroi de fond de la lame. De cette façon, on forme une encoche dans la paroi de fond de la lame et cela près de la paroi à laquelle est rattachée la lame, cette encoche se raccordant à une paroi latérale limitant la rainure. La présence de cette encoche, outre qu'elle facilite le démoulage, permet d'augmenter la flexibilité de la lame. Cette augmentation de flexibilité est une fonction combinée de la hauteur de l'encoche et de la largeur de l'encoche. La hauteur de l'encoche est mesurée dans la direction de la profondeur de la rainure. La largeur de l'encoche est mesurée dans la direction de la largeur de la rainure.

Dans le cadre de l'invention, l'expression "paroi portant la lame" doit ici s'interpréter comme désignant l'une des parois latérales délimitant la rainure.

Grâce à l'invention, il est possible de réduire les efforts pendant le démoulage du pneu et ainsi d'obtenir des lames dont la géométrie n'est pas affectée par ce démoulage.

Avantageusement, et lorsque la bande est neuve, la partie de raccordement s'étend entre un point K de liaison avec la paroi portant la lame et un point I correspondant au point de transition avec la seconde partie. Le point K de liaison avec la paroi portant la lame se trouve à l'état neuf à une distance notée Dk de la surface de roulement. Le point I de transition avec la seconde partie correspond sensiblement au point de changement de signe de courbure entre la première et la seconde partie de la paroi de fond.

Avantageusement, la partie de raccordement avec la paroi portant la lame s'étend sur une largeur D au plus égale à 50 % de la largeur L de la lame mesurée sur la partie de fond de ladite lame (cette largeur L est mesurée entre le point K et la paroi d'extrémité de la lame). Préférentiellement, la plus petite distance D1 séparant les points de cette partie de raccordement de la surface de roulement est inférieure d'au moins 5 % de la distance maximale D2 des points de la seconde partie de la paroi de fond mesurée par rapport à la même surface de roulement.

Avantageusement la bande de roulement est telle que, à l'état neuf, la distance D1 séparant les points de la partie de raccordement de la surface de roulement est inférieure d'au moins 15 % à la distance maximale D2 des points de la seconde partie de la paroi de fond mesurée par rapport à la même surface de roulement.

Avantageusement, la partie de raccordement peut elle-même être formée de plusieurs parties, l'une au moins de ces parties ayant un petit rayon de courbure, c'est-à-dire un rayon au moins égal à 5% de la largeur W de la rainure et au plus 30% de la même largeur W.

Selon une variante avantageuse, la partie de raccordement est formée par une succession de profils courbes se raccordant entre eux (ce cas peut notamment correspondre au cas d'une succession d'arcs de cercle) ou encore d'un seul profil à une seule courbure (arc de cercle).

Grâce à cette invention, la réalisation d'une encoche dans la paroi de fond de chaque lame est favorable puisqu'à partir d'un certain niveau d'usure de la bande et de chaque lame, ce qui reste de chaque lame va pouvoir se désolidariser de la paroi de la rainure et être éjecté. De cette manière, on rétablit ainsi un passage totalement libre pour la circulation de l'eau lors de roulage sur chaussée revêtue d'eau. À noter qu'après une usure supérieure à 50% de la hauteur de la bande de roulement, le problème de bruit lié à la résonance dans les rainures est sensiblement atténué et ne requiert donc plus de dispositif anti bruit.

Avantageusement, le profil de la seconde partie de la paroi de fond de la lame est parallèle au profil du fond de rainure.

Avantageusement, la distance séparant la seconde partie de la paroi de fond du fond de la rainure est au plus égale à 10 % de la profondeur de la rainure.

Dans une variante avantageuse, il est formé une encoche entre chaque lame et la paroi portant ladite lame dans la partie de liaison située à proximité de la surface de roulement à l'état neuf. Cette encoche augmente la souplesse de flexion de chaque lame. Cette encoche peut prendre la forme d'une incision de faible largeur voire de largeur nulle.

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une variante d'un dispositif comprenant deux lames selon l'invention ;
La figure 2 montre une autre variante d'un dispositif comprenant deux lames selon l'invention et pour lesquelles les parties de raccordement sont allongées ;
La figure 3 montre une vue d'une lame unique obstruant en quasi-totalité une rainure d'une bande de roulement selon l'invention.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

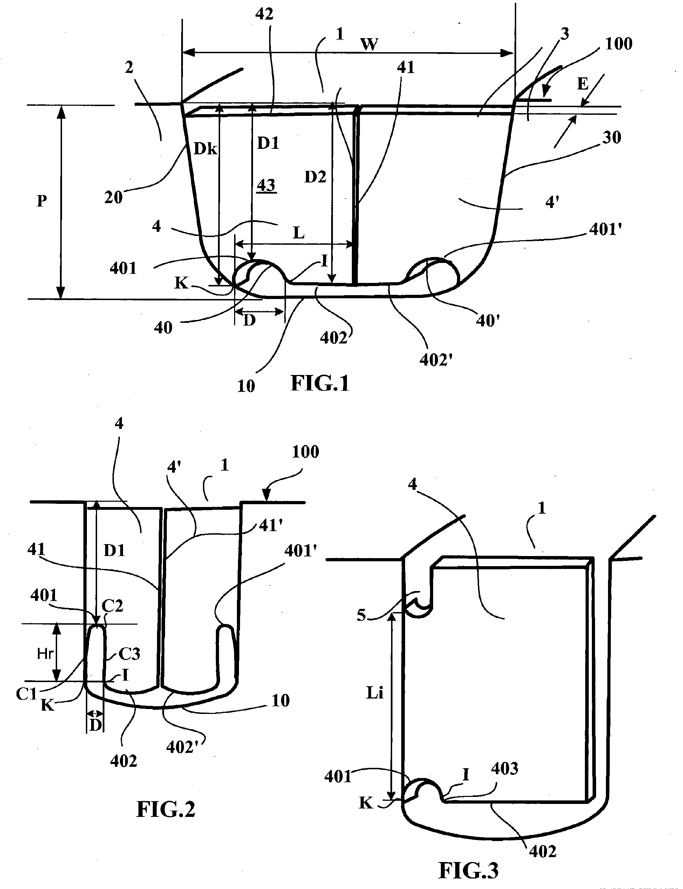

La figure 1 montre, en coupe, une vue partielle d'une bande de roulement selon l'invention équipant un pneu de dimension **225 / 55 R 17**. On a représenté sur cette figure une rainure 1 limitée par deux éléments de relief 2, 3 de la bande, cette rainure 1 s'étendant sensiblement dans une direction circonférentielle du pneu sur lequel est montée ladite bande. Cette rainure 1, de largeur W - mesurée sur la surface de roulement à l'état neuf, égale à 13 mm et de profondeur P égale à 7.5 mm, est limitée par une première paroi 20 et une seconde paroi 30 se faisant face et un fond de rainure 10 reliant entre elles ces deux parois. La bande de roulement comprend une surface de roulement100 destinée à être en contact avec une chaussée pendant le roulage. Dans ce qui suit, la paroi de fond de la rainure correspond à la partie de la rainure qui est conservée après usure de la bande jusqu'à la limite légale fixée par les règlements nationaux.

Cette rainure 1 comprend un dispositif anti bruit formé par une pluralité d'obstacles flexibles moulés dans ladite rainure. Chaque obstacle comprend deux lames 4, 4' occupant chacune la moitié de la section de la rainure 1, ces lames 4, 4' se trouvant dans le prolongement l'une de l'autre. Chaque lame 4, 4' fait saillie sur une paroi 20, 30 respectivement.

Sur la première paroi 20 est moulée une première lame 4 d'épaisseur faible (c'est-à-dire dans le cas présent d'épaisseur égale à 0.6 mm) afin de pouvoir aisément fléchir autour d'un axe suivant sensiblement la liaison de cette première lame 4 avec la paroi 20 sur laquelle elle est liée dans le but de laisser s'écouler l'eau dans la rainure 1 lors d'un roulage sur chaussée revêtue d'eau tout en faisant obstacle à la circulation de l'air en roulage sur chaussée sèche.

Cette première lame 4 est limitée par une paroi de fond 40 faisant face au fond 10 de la rainure, une paroi d'extrémité 41 faisant face à la seconde paroi 30 de la rainure 1 et une paroi de contact 42 destinée à venir en contact avec la chaussée et des parois latérales 43, 44 espacées d'une distance égale à l'épaisseur de la lame.

Chaque lame 4, 4' a une largeur L égale à 6 mm, cette largeur étant mesurée dans la direction de la largeur W de la rainure 1.

La paroi de fond de la première lame 4 comprend une première partie dite partie de raccordement 401 avec la paroi 20 portant cette lame, cette partie de raccordement 401 ayant un profil en demi-cercle, dont le centre de courbure est localisé du côté du fond 10 de la rainure et dont le rayon de courbure est dans le cas présent égal à 1 mm soit 17% de la largeur W de la rainure.

Par "localisé du côté du fond 10 de la rainure", il faut comprendre que la partie de raccordement 401 forme une sorte d'encoche dans la lame, la concavité de cette encoche étant tournée vers le fond 10 de la rainure. Par ailleurs, la partie de raccordement 401 est prolongée par une partie additionnelle 402 substantiellement rectiligne jusqu'à la partie d'extrémité 41 de la lame 4.

La jonction entre la partie de raccordement 401 et la partie additionnelle 402 se fait - sur la vue en coupe de la figure 1, en un point d'inflexion I. La partie de raccordement 401 se termine à son autre extrémité sur la paroi latérale 20 en un point K qui est situé à une distance Dk de la surface de roulement à l'état neuf qui est supérieure à l'épaisseur de matière totale pouvant être usée avant de devoir remplacer le pneu sur un véhicule après roulage (dans le cas présent Dk est égale à 7.3 mm).

On constate que majoritairement tous les points de la partie de raccordement 401 formant une encoche - à l'exception notamment du point de liaison K entre cette partie de raccordement 401 et la paroi 20 portant la lame 4 et du point commun I avec la partie additionnelle 402 de la paroi de fond de la lame, sont plus près de la surface de roulement 100 à l'état neuf que les points de la partie additionnelle par rapport à la même surface de roulement.

En combinaison avec cette première lame 4, il est formé une seconde lame 4' de même géométrie, cette seconde lame étant liée à la seconde paroi 30 située en vis-à-vis de la première paroi 4 afin d'obstruer en quasi-totalité la section transversale de la rainure. Dans le cas présenté, la première lame 4 et la seconde lame 4' sont formées de manière à avoir leurs parties d'extrémité respectives situées en vis-à-vis l'une de l'autre après le moulage de la bande.

Grâce à cet agencement il est plus facile de mouler une pluralité de lames formant un dispositif atténuant le bruit de résonance de l'air dans la rainure.

Par ailleurs et comme la personne du métier est à même de l'imaginer, après une usure suffisante pour atteindre les points de la partie de raccordement situés les plus près de la surface de roulement, les lames se désolidarisent de la bande et libèrent ainsi la totalité de la section restante de la rainure, ce qui est favorable d'un point de vue écoulement de liquide dans la rainure restante.

C'est la raison pour laquelle il peut être avantageux de prévoir que la distance D1 séparant à l'état neuf la surface de roulement 100 des points de la partie de raccordement les plus proches de cette même surface de roulement est inférieure à l'épaisseur de matière à user en roulage. Cette dernière étant indiquée sur le pneu par la présence d'au moins un indicateur d'usure formé en relief sur le fond d'une rainure. Il est donc judicieux que la distance D1 des points de la partie de raccordement 401 les plus proches de la surface de roulement 100 à l'état neuf soit inférieure à la distance de l'indicateur d'usure par rapport à la même surface.

Dans la variante montrée avec la figure 2, le dispositif anti bruit est composé d'une pluralité de paires de lames 4, 4', une première lame 4 étant solidaire d'une paroi 20 délimitant la rainure 1 et une seconde lame 4' étant solidaire de la paroi 30 en vis-à-vis. Les caractéristiques géométriques de ces lames 4, 4' sont sensiblement identiques à celles des lames de la variante montrée avec la figure 1 à la différence près que le profil de la partie de raccordement 401, 401' respectivement des lames 4, 4' avec les parois délimitant la rainure 1 est de forme allongée. La hauteur maximale Hr de cette forme oblongue mesurée entre le point de la partie de raccordement le plus proche de la surface de roulement 100 et le point de liaison K avec la paroi détermine le niveau d'usure D1 à partir duquel on peut considérer que le bruit de résonance n'est plus une composante dominante du bruit émis en roulage et qu'en conséquence on peut ne plus avoir d'obstacles obstruant la rainure.

Dans cette variante, la partie de raccordement 401 comprend une succession de parties de courbures différentes : C1, C2, C3, la courbure intermédiaire C2 étant plus grande que les deux autres courbures C1 et C3. Les courbures C1 et C3 sont quasiment nulles dans cette variante. Dans le cas présent, les lames sont désolidarisées de la bande de roulement bien avant d'atteindre le niveau limite d'usure de la bande tel qu'indiqué par exemple par un indicateur d'usure.

En outre, dans cette variante, la partie additionnelle 402, 402' respectivement de chaque lame 4, 4 suit sensiblement et à très faible distance (dans le cas présent de l'ordre de 0.5 mm) la géométrie, vue en coupe, de la paroi de fond 10 de la rainure 1 afin d'améliorer encore l'efficacité du dispositif anti bruit.

Dans cette variante, la largeur D de la partie de raccordement correspond sensiblement à deux fois le rayon de courbure de la partie C2.

Dans la variante selon l'invention montrée avec la figure 3, on a affaire à un dispositif anti bruit de résonance dans une rainure 1, ce dispositif ne comprenant qu'une seule lame 4 pour fermer transversalement la section de cette rainure 1. La partie de raccordement 401 a la forme d'un demi-cercle dont les points d'extrémités K et I sont situés sensiblement sur une même droite parallèle à une droite tangente à la surface de roulement 100. Entre la partie additionnelle 402 de la paroi de fond de la lame 4 et la partie de raccordement 401, on a prévu une petite partie courbe 403 dont le centre de courbure est situé dans la lame afin d'arrondir l'angle formé entre ces deux parties.

Dans cette variante, il est en outre formé dans la partie de la lame située près de la surface de roulement 100, une autre encoche 5 réduisant la longueur de liaison Li entre la lame 4 et la paroi 20. Cette encoche 5, facile à mouler, en diminuant la longueur de liaison Li augmente la souplesse de flexion de la lame autour d'un axe parallèle à la paroi 20 et s'étendant dans la direction de la profondeur de la rainure 1. Pour satisfaire à la réduction de bruit recherchée par la présence de cet obstacle il est bien entendu judicieux de choisir la dimension de largeur de cette encoche 5 de telle manière qu'elle soit le plus réduite possible. Dans une variante non montrée ici, cette encoche 5 peut prendre la forme d'une incision de faible largeur - c'est-à-dire au plus 0.6 mm - voire de largeur nulle. La largeur de l'encoche 5 est mesurée dans la direction de la largeur de la rainure 1.

L'invention ayant été décrite de manière générale et au moyen de quelques variantes, il doit être compris que cette invention n'est pas limitée à ces seules variantes décrites et représentées. Les diverses variantes décrites ici peuvent être combinées entre elles par la personne du métier en fonction de l'objectif poursuivi.

Il est clair que diverses modifications peuvent y être apportées sans sortir du cadre général de la présente invention. Notamment toutes les variantes décrites ici montrent des lames dont la paroi de contact était en léger décalage vers l'intérieur par rapport à la surface de roulement à l'état neuf, mais il est tout à fait possible de les prévoir comme étant au même niveau voire en léger décalage vers l'extérieur de la même surface de roulement. Il est également possible de former un dispositif de fermeture comprenant deux lames selon l'invention, ces lames étant décalées l'une par rapport à l'autre dans la direction principale de la rainure dans laquelle ledit dispositif de fermeture est formé.

## Revendications

1. Bande de roulement pour pneu, cette bande de roulement ayant une surface de roulement (100) destinée à venir en contact avec une chaussée et comprenant au moins une rainure (1) de largeur W et de profondeur P délimitée par deux parois (20, 30) se faisant face, ces parois étant reliées entre elles par un fond de rainure (10), au moins une rainure (1) comportant au moins un dispositif flexible pour fermer au moins partiellement cette rainure lors de son passage dans le contact avec une chaussée, chaque dispositif flexible comprenant au moins une lame (4, 4') d'épaisseur appropriée pour permettre sa flexion sous l'effet d'une circulation de liquide, cette au moins une lame (4, 4') étant portée par une paroi délimitant la rainure (1), chaque lame (4) d'épaisseur E étant limitée par une paroi de fond (40) faisant face au fond de la rainure (10), une paroi d'extrémité (41) faisant face à l'autre paroi de la rainure et une paroi de contact (42) destinée à venir en contact avec la chaussée et des parois latérales (43, 44) espacées l'une de l'autre d'une distance égale à l'épaisseur E de la lame,
cette bande de roulement étant **caractérisée en ce que** la paroi de fond (40) de la lame (4) comprend une première partie dite partie de raccordement (401) et une seconde partie (402) prolongeant la première partie jusqu'à la partie d'extrémité (41) de la lame, la partie de raccordement (401) se trouvant décalée vers l'extérieur de la bande par rapport à la seconde partie (402) de la paroi de fond de la lame afin de former une encoche.

2. Bande de roulement selon la revendication 1 **caractérisée en ce que** la partie de raccordement (401) avec la paroi portant la lame s'étend sur une largeur D au plus égale à 50 % de la largeur L de la lame (4) mesurée sur la partie de fond de ladite lame.

3. Bande de roulement selon la revendication 2 **caractérisée en ce que** la distance D1 séparant les points de la partie de raccordement (401) de la surface de roulement (100) à l'état neuf est inférieure d'au moins 5 % à la distance maximale D2 des points de la seconde partie (402) de la paroi de fond mesurée par rapport à la même surface de roulement (100).

4. Bande de roulement selon l'une quelconque des revendications 1 à 3 **caractérisée en ce que** la partie de raccordement (401) est formée de plusieurs parties, l'une au moins de ces parties ayant un petit rayon de courbure, c'est-à-dire un rayon au moins égal à 5% de la largeur W de la rainure et au plus 30 % de la même largeur W.

5. Bande de roulement selon l'une des revendications 1 à 4 **caractérisée en ce que** la partie de raccordement (401) est formée d'un seul profil à une seule courbure.

6. Bande de roulement selon l'une des revendications 1 à 5 **caractérisée en ce que** le profil de la seconde partie (402) de la paroi de fond de la lame est parallèle au profil du fond de rainure.

7. Bande de roulement selon l'une des revendications 1 à 6 **caractérisée en ce que** la distance séparant la seconde partie (402) de la paroi de fond du fond (10) de la rainure est au plus égale à 10 % de la profondeur de la rainure (1).

8. Bande de roulement selon l'une des revendications 1 à 7 **caractérisée en ce qu'**une encoche (5) est formée entre chaque lame et la paroi portant ladite lame dans la partie de liaison située à proximité de la surface de roulement (100) à l'état neuf.

## Patentansprüche

1. Laufstreifen für einen Luftreifen, wobei dieser Laufstreifen eine Lauffläche (100) hat, die dazu bestimmt ist, mit einer Straße in Kontakt zu kommen und mindestens eine Rille (1) einer Breite W und einer Tiefe P enthält, die von zwei einander gegenüberliegenden Wänden (20, 30) begrenzt wird, wobei diese Wände durch einen Rillenboden (10) miteinander verbunden sind, wobei mindestens eine Rille (1) mindestens eine elastische Vorrichtung aufweist, um diese Rille bei ihrem Übergang in den Kontakt mit der Straße zumindest teilweise zu schließen, wobei jede elastische Vorrichtung mindestens eine Lamelle (4, 4') geeigneter Dicke enthält, um ihre Biegung unter der Wirkung einer Flüssigkeitsströmung zu erlauben, wobei diese mindestens eine Lamelle (4, 4') von einer die Rille (1) begrenzenden Wand getragen wird, wobei jede Lamelle (4) einer Dicke E von einer Bodenwand (40), die dem Boden der Rille (10) gegenüberliegt, einer Endwand (41), die der anderen Wand der Rille gegenüberliegt, und einer Kontaktwand (42), die dazu bestimmt ist, mit der Straße in Kontakt zu kommen, und von Seitenwänden (43, 44) begrenzt wird, die zueinander einen Abstand gleich der Dicke E der Lamelle haben,
wobei dieser Laufstreifen **dadurch gekennzeichnet ist, dass** die Bodenwand (40) der Lamelle (4) einen ersten Teil, Anschlussteil (401) genannt, und einen zweiten Teil (402) enthält, der den ersten Teil bis zum Endteil (41) der Lamelle verlängert, wobei der Anschlussteil (401) bezüglich des zweiten Teils (402) der Bodenwand der Lamelle zur Außenseite des Streifens versetzt ist, um eine Einkerbung zu bilden.

2. Laufstreifen nach Anspruch 1, **dadurch gekennzeichnet, dass** der Anschlussteil (401) mit der die Lamelle tragenden Wand sich über eine Breite D höchstens gleich 50 % der Breite L der Lamelle (4) gemessen auf dem Bodenteil der Lamelle erstreckt.

3. Laufstreifen nach Anspruch 2, **dadurch gekennzeichnet, dass** der die Punkte des Anschlussteils (401) von der Lauffläche (100) im Neuzustand trennende Abstand D1 um mindestens 5 % kleiner als der maximale Abstand D2 der Punkte des zweiten Teils (402) der Bodenwand gemessen bezüglich der gleichen Lauffläche (100) ist.

4. Laufstreifen nach einem der Ansprüche 1 bis 3, **dadurch gekennzeichnet, dass** der Anschlussteil (401) von mehreren Teilen gebildet wird, wobei mindestens einer dieser Teile einen kleinen Krümmungsradius hat, d.h. einen Radius mindestens gleich 5 % der Breite W der Rille und höchstens gleich 30 % der gleichen Breite W.

5. Laufstreifen nach einem der Ansprüche 1 bis 4, **dadurch gekennzeichnet, dass** der Anschlussteil (401) von einem einzigen Profil mit einer einzigen Krümmung gebildet wird.

6. Laufstreifen nach einem der Ansprüche 1 bis 5, **dadurch gekennzeichnet, dass** das Profil des zweiten Teils (402) der Bodenwand der Lamelle parallel zum Profil des Rillenbodens ist.

7. Laufstreifen nach einem der Ansprüche 1 bis 6, **dadurch gekennzeichnet, dass** der den zweiten Teil (402) der Bodenwand vom Boden (10) der Rille trennende Abstand höchstens gleich 10 % der Tiefe der Rille (1) ist.

8. Laufstreifen nach einem der Ansprüche 1 bis 7, **dadurch gekennzeichnet, dass** eine Einkerbung (5) zwischen jeder Lamelle und der die Lamelle tragenden Wand in dem Verbindungsteil gebildet wird, der sich in der Nähe der Lauffläche (100) im Neuzustand befindet.

## Claims

1. Tread for a tyre, this tread having a tread surface (100) intended to come into contact with a road surface and comprising at least one groove (1) of width W and of depth P delimited by two walls (20, 30) facing one another, these walls being oined together by a groove bottom (10), at least one groove (1) comprising at least one flexible device for at least partially closing this groove as it passes through the contact patch, each flexible device comprising at least one blade (4, 4') of a suitable thickness that allows it to flex under the effect of a circulation of liquid, this at least one blade (4, 4') being borne by a wall delimiting the groove (1), each blade (4) of thickness E being bounded by a bottom wall (40) facing the bottom of the groove (10), an end wall (41) facing the other wall of the groove and a contact wall (42) intended to come into contact with the road surface and lateral walls (43, 44) spaced apart by a distance equal to the thickness E of the blade, this tread being **characterized in that** the bottom wall (40) of the blade (4) comprises a first part referred to as connection part (401) and a second part (402) extending the first part up to the end part (41) of the blade, the connection part (401) being offset towards the outside of the tread with respect to the second part (402) of the bottom wall of the blade so as to form a notch.

2. Tread according to Claim 1, **characterized in that** the connection part (401) for connection with the wall bearing the blade extends over a width D at most equal to 50% of the width L of the blade (4) measured on the bottom part of the said blade.

3. Tread according to Clam 2, **characterized in that** the distance D1 separating the points of the connection part (401) from the tread surface (100) in the new state is at least 5% smaller than the maximum distance D2 of the points of the second part (402) of the bottom wall measured with respect to the same tread surface (100).

4. Tread according to any one of Claims 1 to 3, **characterized in that** the connection part (401) is formed of several parts, at least one of these parts having a small radius of curvature, i.e. a radius at least equal to 5% of the width W of the groove and at most equal to 30% of the same width W.

5. Tread according to one of Claims 1 to 4, **characterized in that** the connection part (401) is formed of a single profile with a single curvature.

6. Tread according to one of Claims 1 to 5, **characterized in that** the profile of the second part (402) of the bottom wall of the blade is parallel to the profile of the bottom of the groove.

7. Tread according to one of Claims 1 to 6, **characterized in that** the distance separating the second part (402) of the bottom wall from the bottom (10) of the groove is at most equal to 10% of the depth of the groove (1).

8. Tread according to one of Claims 1 to 7, **characterized in that** a notch (5) is formed between each blade and the wall bearing the said blade in the connecting part situated near the tread surface (100) in the new state.
